# FASCICULE DE BREVET EUROPEEN

(11) **EP 2 695 675 B1**
(45) Date de publication et mention de la délivrance du brevet: **08.02.2017**
(21) Numéro de dépôt: 13306055.8
(22) Date de dépôt: 23.07.2013
(51) Int. Cl.: B01J 37/20, B01J 38/66

(54) **Procédé de passivation par un composé azoté d'un catalyseur zéolitique, en particulier d'un catalyseur d'hydrocraquage.**
Passivierungsverfahren durch eine Stickstoffverbindung eines zeolithischen Katalysators, insbesondere eines Hydrocrack-Katalysators
Method for passivating a zeolitic catalyst, in particular a hydrocracking catalyst, by a nitrogenous compound

(30) Priorité: 09.08.2012 FR 1202215
(43) Date de publication de la demande: 12.02.2014
(73) Titulaire: EURECAT SA., 07800 La Voulte-sur-Rhône (FR)
(72) Inventeur: Dufresne, Pierre, 26000 Valence (FR); Bremaud, Mickael, 26000 Valence (FR); Galliou, Pauline, 07800 Saint Laurent du Pape (FR); Kirumakki, Sharath, Friendswood TX 77546 (US)
(74) Mandataire: Schmitt, Nicolas A.J.

(56) Documents cités:
- EP-A1- 1 272 272
- EP-A1- 2 295 521
- EP-A1- 2 295 522
- US-A1- 2009 308 790

## Description

L'invention concerne un procédé de traitement d'un catalyseur, en particulier d'un catalyseur d'hydrocraquage. Ce catalyseur contient une fonction hydrogénante et une fonction acide.

Le traitement va sulfurer et activer la fonction hydrogénante et passiver la fonction acide du catalyseur. Cette passivation consiste à réduire l'activité hydrocraquante des sites acides pour éviter des réactions de craquage trop rapides et mal contrôlées, pendant la phase de démarrage de l'unité d'hydrocraquage. Le catalyseur ainsi traité peut être démarré rapidement sans risque d'emballement thermique et avec une garantie de bonnes performances. L'invention est particulièrement pertinente pour les catalyseurs d'hydrocraquage contenant une zéolite, à savoir ceux qui sont les plus acides et donc les plus réactifs, et délicats donc à démarrer.

### ART ANTERIEUR

Les procédés et les catalyseurs d'hydrocraquage de charges pétrolières sont largement connus. Ils permettent de convertir diverses charges lourdes, en particulier des distillats sous vide (Vacuum Gas Oils, VGO), en produits plus légers et plus hydrogénés.

Les catalyseurs d'hydrocraquage contiennent à la fois une fonction hydrogénante et une fonction acide (ou fonction de craquage).
La fonction hydrogénante est assurée le plus souvent par les sulfures mixtes d'au moins un élément du groupe VIB (de préférence Mo, W) et au moins un élément non noble du groupe VIII (de préférence Co, Ni).
La fonction de craquage provient de sites acides, contenus dans une silice alumine amorphe, ou dans une silice alumine cristallisée de type zéolite. Dans des cas très particuliers de l'art antérieur, l'utilisation d'un métal noble (Palladium par exemple) est associée à une teneur élevée en zéolite dans le catalyseur.
Ces catalyseurs présentent soit des sélectivités élevées en gasoil (diesel) et des activités modérées (leur fonction acide est alors assurée par une teneur faible en composé zéolitique ou en silice alumine amorphe dont l'acidité est réputée modérée), soit des sélectivités élevées en naphta et de fortes activités (leur fonction acide est assurée alors par une plus forte teneur en zéolite). Dans un cas intermédiaire, la production est maximisée pour le kérosène (jet fuel).

Avant leur contact avec la charge dans le réacteur d'hydrocraquage, les catalyseurs sont activés par sulfuration des éléments catalytiques de la phase hydrogénante (en général l'association Nickel Molybdène NiMo ou Nickel Tungstène NiW) présente sous forme oxyde. L'activation est réalisée soit in-situ (dans le réacteur) soit ex-situ (hors du réacteur). Ces méthodes sont connues de l'homme du métier.

Dans la méthode in-situ, c'est le sulfure d'hydrogène qui est l'agent sulfurant; il est soit introduit directement en mélange avec l'hydrogène, soit généré par décomposition d'un agent sulfurant ajouté, comme par exemple le DMDS (diméthyldisulfure), ou même par décomposition des composés sulfurés contenus naturellement dans une charge légère alimentant l'unité d'hydrocraquage pendant la phase de démarrage.
Les méthodes ex-situ sont de deux types, et produisent des catalyseurs soit simplement sulfurés, soit sulfurés et activés. Dans le 1^{er} cas, le catalyseur est mélangé à un composé sulfuré comme du soufre élémentaire ou des polysulfures organiques, et éventuellement ensuite traité thermiquement en absence d'hydrogène. La phase sulfurée active (par ex de sulfure de Nickel avec Molybdène ou Tungstène) n'est ainsi pas encore formée. On parle dé catalyseur pré-sulfuré. Dans le 2^{ème} cas, le catalyseur pré-sulfuré est activé en présence d'hydrogène, ou bien le catalyseur non sulfuré est directement traité avec un composé sulfuré, par exemple le sulfure d'hydrogène H2S, en mélange avec l'hydrogène, ce qui génère directement la phase sulfurée active (par ex sulfures mixtes NiS/MoS2-WS2). On parle de catalyseur pré-sulfuré activé.

Les catalyseurs ainsi obtenus sont extrêmement actifs au niveau de leur fonction acide, et donc de leur capacité de craquage. En effet, ils n'ont pas encore atteint leur état d'équilibre (en régime) car ils n'ont pas encore été empoisonnés, ou plus exactement passivés, par les éléments basiques contenus dans la charge, des composés azotés organiques plus ou moins déjà décomposés en ammoniac. Ces catalyseurs ont donc une propension importante à promouvoir la réaction d'hydrocraquage dans des conditions précoces (de démarrage), c'est-à-dire à une température où un catalyseur en état d'équilibre ne serait pas actif.
Comme la réaction d'hydrocraquage est très exothermique, le risque que cette réaction d'hydrocraquage soit mal contrôlée pendant la phase de démarrage et qu'elle provoque des exothermes ou des points chauds dans le lit catalytique est important. Au pire, une réaction non contrôlée pourrait provoquer un emballement du réacteur, voire une divergence, qui peut faire monter la température à un point tel que le catalyseur soit abimé, tout aussi bien que les internes du réacteur ou le réacteur lui-même.
Le contrôle de cette réaction d'hydrocraquage sur un catalyseur pendant la phase de démarrage (procédure de start-up) est donc indispensable pour des raisons de sécurité.

Une fois la phase de démarrage passée, après quelques jours de fonctionnement, compte tenu de ce que là charge de l'hydrocraqueur contient des teneurs en azote souvent comprises entre 300 et 3000 ppm, le catalyseur dans son état de régime devient partiellement recouvert de molécules azotées basiques, dont l'ammoniac. Un certain niveau d'équilibre d'adsorption-désorption de composés azotés basiques est ainsi atteint sur les sites acides de la zéolite, les sites les plus acides ayant été fortement neutralisés, les sites les moins acides étant peu neutralisés, et le catalyseur fonctionne ainsi de façon stable dans des conditions conformes à ce qui est attendu.

Il est clair que l'état d'un catalyseur en régime est très différent de celui d'un catalyseur frais quant à sa force acide et donc sa capacité à craquer les molécules hydrocarbonées, et toute la problématique est bien le passage de cet état de catalyseur frais à un catalyseur en régime.

C'est pourquoi des méthodes dites de passivation ont déjà été proposées dans le but de réduire l'activité des sites acides.

Cette passivation a été obtenue en introduisant des poisons sélectifs de la phase acide du catalyseur pendant la phase de démarrage de l'unité d'hydrocraquage, donc in-situ, et permettre d'obtenir une qualité de produits constante dans le temps. Ainsi le brevet US-5888377 (UOP) a préconisé l'addition d'ammoniac et le brevet US-3794580 (Shell) l'injection d'amines.

Dans le brevet US-5141909 (Chevron), il est décrit un procédé visant à sélectiver le catalyseur zéolitique vers le kérosène par ajout in-situ d'un agent sélectivant azoté sur un catalyseur non sulfuré. Ce catalyseur contient une quantité importante (5-95% et 60% en exemple) d'une zéolite Y particulière (ratio silice/alumine de 27 à 33) et un métal noble du groupe VIII (0.01 à 5% et 0.28% Pd en exemple), la phase active (métal noble) étant sous forme métallique (pas de sulfuration). La fonction de craquage ayant une place prépondérante par rapport à la fonction hydrogénante, pour orienter la réaction vers la production de kérosène, il fallait réduire l'activité de craquage dès le démarrage de la réaction pour ne pas produire en excès des gaz légers et du naphta. Dans ce but de sélectivation, un agent azoté est ajouté à la charge à traiter en début de cycle jusqu'à ce que la quantité de liquide soit maximale et la quantité de gaz minimale. Cette opération est effectuée in-situ à la température de la réaction, soit 316°C, dans l'exemple et sur la forme métallique de la phase active.

Dans la demande de brevet US-2009/308790 (China Petroleum), le composé azoté est introduit sur un catalyseur contenant du soufre, mais non activé ex-situ.
Ce brevet décrit un procédé de préparation d'un catalyseur contenant une fonction hydrogénante, un composé azoté organique, un agent sulfurant (soufre élémentaire ou sulfure organique ou inorganique), et un solvant organique (huile hydrocarbonée ou ester). Le procédé comprend tout d'abord l'introduction d'un composé azoté sur un catalyseur pouvant contenir un tamis moléculaire (zéolite Y par exemple), et la phase catalytique (NiW par exemple) étant sous forme oxyde, cette introduction étant suivie de l'introduction d'un agent de sulfuration (soufre élémentaire en exemple) dans un solvant organique (acétates, huile d'arachide exemplifiés), puis éventuellement d'un traitement thermique à au plus 180-300°C sous une atmosphère de gaz inerte ou d'oxygène.

Lorsque l'introduction de l'agent de sulfuration est effectuée ex-situ, le traitement thermique final est réalisé. Le catalyseur obtenu est chargé dans le réacteur et activé avant d'être mis au contact de la charge à traiter.
Le catalyseur est ainsi azoté et sulfuré simultanément ex-situ puis activé in-situ sous hydrogène. Donc il n'est pas réellement prêt à l'emploi, la phase catalytique devant se former dans le réacteur pendant une étape spécifique du démarrage de l'unité. En effet, une activation est nécessaire, qui a lieu vers 350°C et sous hydrogène. La température doit ensuite être abaissée vers 300°C, qui est la température dite de start-of-run, pour traiter la charge, par exemple en hydrocraquage.
D'autre part, il est à noter que l'utilisation d'un solvant organique pendant la phase de préparation présente des inconvénients au niveau sécurité et environnement.

Dans un brevet EP-335754, la demanderesse a également préconisé un procédé avec introduction simultanée de soufre et azote suivi d'activation sous hydrogène. Ce procédé comprend dans une première étape, à une température de 0-50°C, une incorporation dans le catalyseur de polysulfure liquide et d'un composé organique azoté liquide apte à se décomposer en ammoniac. Ce produit est traité thermiquement dans une seconde étape, à 65-275°C, en présence de vapeur d'eau ou de gaz inerte humide, mais en l'absence d'hydrogène. La température est élevée au-dessus de 275°C en présence d'hydrogène pour effectuer la sulfuration/activation, ceci étant réalisé in-situ où ex-situ.
On a pu observer que l'activation sous hydrogène d'un catalyseur contenant ainsi un polysulfure organique peut s'effectuer de façon assez violente, le composé sulfuré se décomposant rapidement autour de 130-150°C en sulfure d'hydrogène, lequel avec l'aide de l'hydrogène réalise la sulfuration des espèces métalliques. Ces réactions sont exothermiques et peuvent provoquer un échauffement du lit catalytique dont l'amplitude peut être difficile à contrôler et fixer. Celle-ci dépend du taux d'enlèvement des calories par le débit de gaz. L'élévation de température peut aussi provoquer une désorption partielle du composé azoté, au point qu'il est souvent difficile d'évaluer ce qu'il reste comme quantité d'azote sur le catalyseur avant l'introduction de la charge liquide, et en particulier s'il en reste assez pour passiver effectivement le catalyseur sans risque de réaction prématurée d'hydrocraquage. L'élévation de température peut être plus faible si l'activation s'effectue en présence de charges hydrocarbonées qui sont plus efficaces que le gaz seul pour enlever les calories. Néanmoins, l'introduction de charge craquable à ce niveau est délicate car si un exotherme se manifestait néanmoins à ce moment, toutes les conditions seraient réunies pour provoquer un emballement de la réaction.
Dans la pratique, ce procédé est peu applicable sans prendre des précautions très importantes et coûteuses pour réduire les risques.
Cet inconvénient vaut également pour la demande de brevet US-2009/308790 (China Petroleum), correspondant à un catalyseur contenant du soufre et de l'azote, mais non encore activé.

Le fait de charger dans le réacteur un catalyseur non activé a des conséquences importantes sur la procédure de démarrage. En effet, cette procédure doit impérativement comporter une phase de montée en température progressive suivie par un palier de plusieurs heures effectué à des températures de 320-350°C, étape d'activation, nécessaire pour fabriquer cette phase active constituée de sulfure mixtes qui s'effectue avec l'hydrogène et le soufre préalablement chargé sur le catalyseur. Cette étape additionnelle, quand elle est effectuée in-situ rajoute du temps à la période de démarrage, temps perdu pour la production de l'unité.

Des méthodes de traitement de catalyseurs avec des composés azotés ont également été utilisées mais pour passiver des sites hydrogénants dans des catalyseurs non zéolitiques. Il s'agit alors plus d'une méthode de sélectivation que d'une passivation. Ainsi dans le brevet US-6120679 (Nippon Mitsubishi Oil), il est décrit une méthode dite de passivation, appliquée sur un catalyseur contenant du soufre. Dans ce procédé de désulfuration d'essence de FCC (Craquage catalytique en lit fluidisé), on recherche l'élimination du Soufre tout en minimisant la perte en octane, l'octane étant apporté par les oléfines. Il fallait donc maintenir les sites actifs vis-à-vis de la désulfuration tout en réduisant l'activité des sites actifs pour l'hydrogénation des oléfines. A cet effet, il est introduit sur le catalyseur un composé basique azoté qui a pour propriété de s'adsorber essentiellement sur les sites actifs en hydrogénation. Les catalyseurs utilisés sont de type GVIB-GVIII/alumine, par exemple CoMo ou NiMo/alumine et sont dépourvus de zéolite. Le composé azoté est introduit sur le catalyseur sous forme gazeuse ou liquide, et par exemple en mélange avec un solvant hydrocarboné, et à raison de plus de 10 moles (de composé) /mole de métaux; il est indiqué que la température doit être d'au plus 200°C, car sinon une réaction d'hydrocraquage apparaît qui réduit l'adsorption du composé azoté. Les exemples montrent que le catalyseur avec la phase hydrogénante sous forme oxyde est chargé dans le réacteur, un composé soufré est introduit puis le catalyseur est traité par le composé azoté (pyridine par ex) en présence d'hydrogène à 150°C, et la charge est ensuite envoyée sur le catalyseur.

On a donc pu constater que le procédé de passivation in-situ tel que pratiqué dans l'art antérieur présente des inconvénients:
- il allonge le temps de démarrage de l'unité d'hydrocraquage et exige une attention particulière de la part de l'opérateur ;
- il nécessite l'injection de composé azoté, souvent de l'ammoniac, ce qui implique des précautions particulières en matière de sécurité et d'environnement (stockage du produit, injection, traitement des effluents...) ;
- la quantité d'azote est difficile à déterminer, car le catalyseur en adsorbe beaucoup. En effet à la température à laquelle doit se faire la passivation in-situ, l'adsorption d'azote ne s'effectue pas sélectivement sur les sites acides. D'autres sites, probablement les éléments métalliques, contribuent à adsorber de l'azote, de façon temporaire à basse température, ce qui conduit globalement à des quantités excédentaires d'azote adsorbé ;
l'ammoniac en excès va ensuite se désorber du catalyseur pendant la phase de montée en température, ce qui présente un double inconvénient. D'une part, il peut contribuer à la formation de sulfure d'ammonium dans les équipements en aval du réacteur, ce qui peut générer des pertes de charge gênantes, voire empêcher le fonctionnement des compresseurs de gaz. En effet NH3 et H2S se combinent facilement en sulfure d'ammonium, qui cristallise dans les parties froides de l'installation. En général, il est prévu des équipements de lavage à l'eau chargés de dissoudre en continu ce composé, mais néanmoins l'afflux important de NH3 peut causer une situation inhabituelle. D'autre part, cet azote excédentaire se retrouve intégralement dans les effluents liquides aqueux, qu'il faut traiter dans une station de traitement des effluents.

EP-1272272-B1 décrit un procédé de sulfuration d'une composition catalytique contenant un additif.

### RESUME DE L'INVENTION

Le besoin existe de développer un nouveau procédé acceptable au plan environnemental et sécurité, efficace pour permettre un démarrage rapide et sans risque de l'unité en raffinerie. Le gain de temps au niveau de la phase de démarrage du réacteur permet d'atteindre plus vite les conditions de production de produits pétroliers aux spécifications et correspondent à un gain de productivité important.

L'invention ne présente pas les inconvénients des procédés de l'art antérieur.
Des avantages importants sont que, du fait de l'introduction de l'azote ex-situ, de l'introduction de soufre ex-situ, de l'activation (fabrication de la phase active) ex-situ, de la non utilisation de composés azotés in-situ, le catalyseur chargé dans le réacteur contenant la quantité d'azote ajustée au nombre de sites acides, le temps de démarrage devient minimal, la quantité d'ammoniac désorbée par le catalyseur est minimale, la sécurité du procédé est renforcée.

L'invention propose un procédé dans lequel le catalyseur arrive prêt à l'emploi sur le site de la raffinerie, c'est-à-dire sulfuré et activé, chargé en azote, sans qu'il y ait besoin de réaliser l'activation par sulfuration du catalyseur dans le réacteur comme c'est le cas dans l'art antérieur. Le catalyseur contient de l'azote. Il est passivé ou bien l'action de passivation finale est obtenue dans le réacteur sans opération supplémentaire.

L'invention est particulièrement pertinente pour les catalyseurs, tels que ceux d'hydrocraquage, contenant une zéolite. Ceux-ci sont les plus acides et les plus réactifs et donc délicats à démarrer. Le traitement comprend la sulfuration et l'activation de la fonction hydrogénante et la passivation de la fonction acide du catalyseur. Cette passivation consiste à réduire l'activité hydrocraquante initiale des sites acides de la zéolite pour éviter des réactions de craquage trop rapides, et donc un emballement, pendant la phase de démarrage de l'unité d'hydrocraquage.

L'invention concerne plus précisément un procédé de traitement ex-situ d'un catalyseur contenant au moins une phase hydrogénante, et au moins une silice alumine amorphe ou une zéolite contenant des sites acides, ledit procédé comportant
- une étape d'introduction d'azote par contact à une température inférieure à 100°C, avec au moins un composé azoté basique qui est l'ammoniac ou un composé décomposable en ammoniac, ledit composé étant introduit à raison de 0.5-10% poids (exprimé en équivalent N) et
- une étape d'activation par sulfuration avec un gaz contenant de l'hydrogène et de l'hydrogène sulfuré à une température d'au moins 250°C, cette étape étant réalisée avant l'étape d'introduction d'azote
Le catalyseur obtenu est éventuellement séché.
La passivation, c'est-à-dire la fixation de l'azote sur les sites acides, est obtenue par traitement thermique sous hydrogène à au moins 250°C.L'étape de sulfuration/activation ayant été réalisée avant l'étape d'introduction dudit composé azoté, le catalyseur obtenu est chargé dans le réacteur et la passivation finale est avantageusement obtenue dans le réacteur. Le catalyseur est avantageusement séché ex-situ après introduction du composé azoté liquide.

De préférence, le composé azoté est choisi parmi le groupe des amines solubles dans l'eau. Avantageusement, le composé azoté est introduit par imprégnation à sec en présence d'un solvant, de préférence l'eau. De préférence, le catalyseur est ensuite séché Généralement, l'étape d'introduction d'azote est réalisée en l'absence d'hydrogène.
Le soufre et l'azote sont introduits de façon à ce que le catalyseur obtenu contienne de 5 à 25% poids de soufre et de 0,1 à 10 % poids d'azote, de préférence de 8 à 15% S et de 1 à 5% N.

De préférence, le catalyseur contient comme phase hydrogénante au moins un élément du groupe VIB et au moins un élément non noble du groupe VIII. Le procédé s'applique particulièrement bien aux catalyseurs contenant une zéolite.

Le procédé s'applique particulièrement bien pour un catalyseur d'hydrocraquage, et notamment à ceux contenant une zéolite, en particulier une zéolite Y ou USY (Ultra Stable Y), et au moins un élément hydrogénant, le plus souvent un élément du GVIII, noble ou non noble, et de préférence non-noble.

Les catalyseurs préférés concernés par l'invention contiennent au moins une zéolite et au moins un élément du groupe VIII, en général du nickel, entre 2 et 8 % poids (calculé en base oxyde NiO), et au moins un élément non noble du groupe VIB, en général du molybdène et du tungstène, entre 10 et 30 % poids (calculé en base oxyde MoO3, WO3). De préférence, le catalyseur contient le couple NiMo ou NiW. D'autres éléments peuvent être présents dans lé catalyseur, à titre d'additifs, tels que le phosphore ou le bore...
Ces éléments catalytiques des groupes VIB et VIII sont sous forme oxyde dans le catalyseur à traiter.

Le procédé selon l'invention permet de traiter les catalyseurs neufs (catalyseurs non encore utilisés) ou catalyseurs régénérés (catalyseurs usés issus de la réaction catalytique qui sont régénérés, les méthodes de régénération sont connues de l'homme du métier).

L'invention concerne également l'utilisation du catalyseur obtenu par le procédé selon l'invention dans un procédé de transformation de charges hydrocarbonées, qui est de préférence un procédé d'hydrocraquage.

### DESCRIPTION DETAILLE DE L'INVENTION

Toute zéolite contenant des sites acides peut être traitée. Parmi ces zéolites, ou tamis moléculaires, on peut citer celles de type Y ou USY (Ultra Stable Y), MFI ou ZSM5, Beta, Oméga, ou tout aluminosilicate cristallisé ayant des atomes d'aluminium en position tétraédrique et entouré de Silicium via des ponts oxygène et générant un proton H+ accolé à chaque atome d'aluminium tétraédrique. Les zéolites pouvant bénéficier avantageusement de l'invention sont décrites dans l'ouvrage de Meier, W. M, et al, Atlas of Zeolite Structure Types, 4th Ed., Elsevier: Boston (1996). La teneur en zéolite dans le support (zéolite(s) + liant(s)) est comprise entre 1 et 70% pds et plus généralement entre 3 et 50% poids et de façon encore plus préférée entre 5 et 30%.

Sur ce catalyseur, il est réalisé une étape d'introduction d'azote par contact avec au moins un composé azoté basique. Cette étape est séparée de l'étape de sulfuration. L'azote et le soufre ne sont pas introduits ensemble.
Ce composé est l'ammoniac ou un composé décomposable en ammoniac dans les conditions de l'opération d'hydrocraquage. Le composé azoté peut être introduit à l'état gazeux mais de préférence à l'état liquide.
Les composés préférés sont de la famille des amines. Par exemple des amines primaires, secondaires ou tertiaires, les diamines et polyamines, les alkylamines, les arylamines, les arylalkylamines, l'aniline, la méthylaniline, la diméthylaniline, la diphénylamine, la triphénylamine. Des amines préférées sont lés alkylamines, et en particulier les éthanolamines comme par exemple la N-methyldiethanolamine (MDEA) ou la N-methylethanolamine (MAE), la triéthanolamine (TEA), d'autres comme la 3-diethylamino-propylamine (DEAPA) ou la N,N-dimethyldipropylenetriamine (DMAPAPA), la tri-n-butylamine (TNBA), l'hexadecylamine (HDA), l'oleyamine (OL, Octa-9-decenylamine).
Les amines solubles dans l'eau sont les plus faciles à mettre en oeuvre. Mais il est également possible d'utiliser d'autres solvants au besoin, comme par exemple des alcools, du white spirit, ou d'autres liquides minéraux ou organiques connus pour dissoudre, dans les conditions du procédé, les composés azotés choisis.

L'introduction de l'azote sur le catalyseur s'effectue à une température inférieure à 100°C et de préférence en l'absence d'hydrogène. Les meilleurs effets de passivation sont obtenus lorsque la quantité voulue d'azote est répartie de façon homogène sur tous les grains de catalyseur. Cette homogénéité résulte par exemple de l'emploi d'un lit en mouvement pour effectuer cette étape.

Une façon commode d'introduire ce composé azoté est de le diluer dans un solvant, puis de procéder à une imprégnation à sec qui permet de remplir le volume poreux du catalyseur. Ensuite le catalyseur est séché afin d'évaporer ce solvant en partie, et de préférence en totalité. On utilisera de préférence des composés azotés hydrosolubles, ce qui permet d'utiliser l'eau comme solvant Cette disposition est préférable au plan de l'environnement, de la sécurité et du coût.

L'action finale de passivation consiste en la fixation sélective de composés azotés sur les sites acides de la zéolite. Elle est finalisée lors d'un traitement thermique sous hydrogène à au moins 250°C du catalyseur contenant de l'azote. Cette fixation peut être obtenue ex-situ mais tout aussi bien in-situ lors du démarrage de la réaction. Cette action finale consiste en ce que le précurseur azoté se désorbe partiellement des sites provisoires d'adsorption pour recouvrir sélectivement les sites acides de la zéolite, dans l'état originel de cette molécule azotée ou sous forme partiellement décomposée en ammoniac.

L'azote est introduit de façon à ce que le catalyseur obtenu contienne de 0,1 à 10 % pds d'azote (calculé en poids de N), de préférence de 1 à 5% pds de N. La quantité d'azote est adaptée en fonction du type de catalyseur, et plus précisément en fonction du nombre de sites acides et du degré de passivation souhaité.

Le nombre et la force des sites acides d'un catalyseur d'hydrocraquage dépendent de la proportion de zéolite dans ce catalyseur ainsi que du type de zéolite. Il est connu que le nombre et la force de sites acides peuvent se régler grâce au rapport Silice/Alumine de la charpente cristalline. Ainsi les catalyseurs les plus acides, donc les plus craquants et permettant d'obtenir du naphta comme produit préférentiel, contiennent une quantité plus importante de zéolite, laquelle est elle même riche en sites acides grâce à un rapport Si/Al de charpente cristalline modéré. Les catalyseurs permettant d'obtenir du gasoil (diesel) comme produit préférentiel contiennent une proportion modérée de zéolite, laquelle est elle même moins riche en sites acides grâce à un rapport Si/Al de charpente élevé. Certains.catalyseurs ne contiennent pas de zéolite, simplement un aluminosilicate amorphe, dont les sites acides sont moins forts que ceux d'une structure cristalline. Une catégorie intermédiaire correspond à des catalyseurs plutôt sélectifs en kérosène (jet fuel).

Pour les catalyseurs sélectifs en naphta, la quantité d'azote sera souvent de 2-10 % pds (calculé en poids de N) et elle sera plutôt de 0.5-4 % pds de N pour des catalyseurs orientés vers un objectif diesel.

Le procédé comporte également une sulfuration/activation de la phase hydrogénante. Elle est réalisée avant l'introduction du composé azoté, mais non simultanément.
L'étape de sulfuration/activation est toujours réalisée en présence d'hydrogène. Elle est effectuée avec un gaz contenant un mélange d'hydrogène et d'hydrogène sulfuré (H2/H2S), à une température d'au moins 250°C, et à une pression qui peut être la pression atmosphérique. Elle est de préférence réalisée en l'absence de solvant organique; ceci présente un avantage au niveau sécurité et mise en oeuvre industrielle. Avantageusement, la température est supérieure à 300°C ou mieux d'au moins 320°C, voire 350°C, en particulier pour le couple NiW; ceci permet une activation plus complète, à savoir une meilleure formation de la phase active sulfure. L'introduction de l'azote s'effectue ex-situ sur le catalyseur contenant déjà une phase active sulfurée et activée ex-situ. L'étape de sulfuration/activation est effectuée de préférence avec un gaz contenant un mélange d'hydrogène et d'hydrogène sulfuré (H2/H2S), à une température d'au moins 250°C, et à pression atmosphérique.
Il est obtenu un catalyseur sulfuré, activé et contenant de l'azote.

L'action de finalisation de la passivation, consistant en la fixation sélective sur les sites acides du composé azoté basique, éventuellement décomposé en ammoniac, s'effectue de façon préférée in-situ pendant la montée en température du catalyseur dans le réacteur sous pression d'hydrogène. Dans ce cas, le catalyseur sulfuré, activé et chargé en azote peut être séché ex-situ puis chargé dans le réacteur. Le séchage permet d'éliminer en partie au moins le solvant utilisé pour l'introduction d'azote avec un composé azoté liquide.
L'action de passivation finale peut tout aussi bien être réalisée ex-situ.

Le procédé selon l'invention est préféré, par rapport à un procédé non conforme à l'invention dans lequel l'étape de sulfuration/activation est réalisée après l'étape d'introduction dudit composé azoté,
pour 2 raisons. La première est que, dans le procédé non conforme à l'invention, on a pu constater une légère perte d'azote lors de la sulfuration/activation, ce qui nécessite un ajustement de la quantité initiale d'azote adsorbé et peut compliquer le processus de préparation.

La seconde concerne les propriétés d'auto-échauffement des catalyseurs sulfurés.

Les catalyseurs d'hydrotraitement/hydrocraquage à base de métaux des groupes VI et VIII de type Cobalt ou Nickel et Molybdène ou Tungstène contenant du soufre ont un caractère auto-échauffant. Ce caractère est plus ou moins marqué selon la quantité de phase sulfure : fort pour des catalyseurs activés, plus faible pour des catalyseurs contenant encore essentiellement des oxydes et un composé contenant du soufre. Ce phénomène d'auto-échauffement est connu de l'homme du métier.
Dans l'invention, le fait d'introduire de l'azote sur le catalyseur déjà activé, donc déjà auto-échauffant, permet une réduction de cet effet. La raison peut être la présence du composé azoté, peut être aussi que l'opération de séchage a pour effet de porter le catalyseur à température élevée en présence d'une certaine quantité d'oxygène. Ainsi, l'oxydation superficielle de la phase sulfure, ou, à tout le moins, la chimisorption d'oxygène sur cette phase sulfure métallique, a pour effet de réduire l'effet d'auto-échauffement. Ceci constitue un bénéfice apprécié de l'invention. Si le solvant utilisé est l'eau, le séchage peut s'effectuer par exemple à des températures de 120-140°C en présence d'un air ou d'air appauvri en oxygène.

L'introduction d'azote est réalisée ex-situ de préférence sur des particules de catalyseur en mouvement. Le lit catalytique est alors de préférence un lit mobile, par exemple un lit circulant, un lit fluidisé, un lit expansé, un lit bouillonnant, ou un lit rotatif.
L'avantage d'utiliser un lit en mouvement, est de pouvoir obtenir une répartition homogène de l'azote sur tout le lit, notamment lorsqu'il est amené par un liquide.
Ceci n'était pas le cas lorsque, comme dans l'art antérieur, l'azote est amené in-situ dans le réacteur en lit fixe, soit sous forme liquide, soit sous forme gazeuse. Cet azote peut être distribué dans le réacteur de façon très inégale, avec des forts gradients de concentration en azote. Ces écarts dans les niveaux de passivation peuvent engendrer localement des exothermes dans les zones où la passivation serait insuffisante.
En revanche, on a pu constater que dans le catalyseur préparé selon l'invention, la teneur en azote varie statistiquement d'au plus 20% autour d'une valeur moyenne correspondant à la spécification. Cette teneur moyenne est comprise entre 0.5 et 10% pds (exprimé en N) et de préférence de 1 à 5% N.
L'introduction d'azote peut s'effectuer par une technique d'imprégnation à sec d'une solution contenant le composé azoté. Elle est réalisée de manière connue, de façon à remplir plus ou moins complètement (et de préférence complètement) le volume poreux du catalyseur.

Lorsqu'elle est réalisée ex-situ, la sulfuration/activation est opérée avantageusement sur des particules de catalyseur en mouvement. Le lit catalytique est alors de préférence un lit mobile, par exemple un lit circulant, un lit fluidisé, un lit expansé, un lit bouillonnant, ou un lit rotatif.

L'avantage d'utiliser un lit en mouvement, et de préférence un lit mobile, est de pouvoir obtenir une répartition homogène du soufre sur tout le lit.

Cet avantage est particulièrement intéressant lorsque le catalyseur contient déjà l'azoté qui a été introduit ex-situ comme décrit dans les types de lit ci-dessus, la sulfuration/activation et la passivation par fixation de l'azote sur les sites acides se font de façon homogène.

L'invention concerne également l'utilisation du catalyseur obtenu par le procédé selon l'invention dans un procédé de transformation de charges hydrocarbonées, qui est dé préférence un procédé d'hydrocraquage.

Le procédé d'hydrocraquage consiste à transformer une charge pétrolière lourde, souvent un distillât sous vide, en différents produits plus raffinés et plus légers, en particulier, des bases d'huiles lubrifiantes, du gasoil, du kérosène (ou jet fuel), des essences. Il s'effectue en présence d'hydrogène à des pressions comprises en général entre 100 et 200 bars, à des températures de 300 à 400°C. Ce procédé est largement décrit dans l'art antérieur.
La mise en opération du procédé d'hydrocraquage débute par une phase de démarrage qui comporte une montée en température graduelle jusqu'à la température de réaction en présence d'hydrogène. La passivation se finalise, si besoin, lors de cette étape. Ultérieurement, à plus haute température, l'ammoniac se désorbe partiellement à un niveau d'équilibre et le catalyseur retrouve alors une activité correspondant à son état de régime.

Le procédé selon l'invention permet ainsi un meilleur contrôle des traitements de sulfuration/activation de la phase hydrogénante et d'introduction de l'azote sur les sites acides; il est ainsi obtenu un catalyseur non seulement mieux passivé mais également très actif en fonctionnement établi, comme le montrent les exemples ci-après.

### Exemples:

### Exemple 1: comparatif - catalyseur A - sulfuration/activation par H2/H2S, sans introduction d'azote

200ml d'un catalyseur commercial d'hydrocraquage contenant environ 20% de zéolite USY, de l'alumine et 4.3% pds de NiO et 22.7% pds de WO3 sont chargés dans un réacteur en verre et sulfurés en présence de H2/H2S dans les conditions suivantes: débit de 25 litres d'H2S et 37 litres H2 par heure, une montée en température de 2°C/mn jusqu'à 350°C avec un palier de 4h à cette température, refroidissement par un flux de N2, puis mise à l'air ambiant pendant 4h.

Il est obtenu le catalyseur A sulfuré, activé qui contient 7.1%pds de soufre, ce qui correspond à 95% de la quantité stoechiométrique théorique pour les sulfures WS2 et Ni3S2.

### Exemple 2 : comparatif - catalyseur B - sulfuration, pas d'activation, suivie d'introduction d'azote par l'amine MDEA)

200ml du catalyseur oxyde comme utilisé à l'exemple 1 sont imprégnés avec une solution de TNPS (tertiononyl polysulfure contenant 37% pds de soufre) dans du toluène, et séchés sous débit de N2 à 140°C.

120g.de ce catalyseur (exprimé sur la base du catalyseur séché) sont ensuite imprégnés avec 48ml d'une solution de 4ml de MDEA (methyldiethanolamine) dans 44ml d'eau pour introduire 2% poids de N, puis séchés à nouveau sous débit d'un mélange air/azote à 120°C. La teneur en soufre du catalyseur est de 7.3%pds et celle d'azote de 2,16.%.

On obtient ainsi le catalyseur B, sulfuré mais non activé, et contenant de l'azote. Ce catalyseur s'apparente au catalyseur de l'art antérieur US-2009/308790.

### Exemple 3 : selon l'invention: catalyseur C1 et non conforme à l'invention: catalyseur C2 - sulfuration/activation par H2S/H2, suivie ou précédée d'introduction d'azote par l'amine MDEA

120g (exprimé sur une base de catalyseur sec) du catalyseur A sulfuré de l'exemple 1 sont imprégnés avec 48ml d'une solution de 4ml de MDEA (methyldiethanolamine) dans 44ml d'eau pour introduire 2% de N, puis séchés sous débit d'un mélange air/azote à 120°C. On obtient le catalyseur C1 sulfuré, activé, et contenant de l'azote. La teneur en soufre du catalyseur est de 7.1%pds et celle d'azote de 2,03%.
La propriété d'auto-échauffement est mesurée comme suit. Le catalyseur est placé dans une boite grillagée cubique d'un pouce de côté, avec un thermocouple placé au centre de la boite ; le cube est introduit dans une étuve préchauffée à la température T. La température est enregistrée. Lorsque cette température atteint le niveau T+60°C dans les 6h après introduction dans le four, le test est dit positif et l'expérience recommencée à une température de 10°C en dessous. A l'inverse, si le test est négatif (température qui n'atteint pas T+60°C) le test est répété à T+10°C, et ce jusqu'à trouver un niveau de température T' qui donne un test positif. Le résultat est annoncée par la Température Critique d'Auto-échauffement (TCAE) qui s'exprime par la valeur T'diminuée de 5°C (T'-5°C).
La TCAE du catalyseur C1 est de 95°C, ce qui signifie que le catalyseur est encore à classer comme auto-échauffant selon la législation, mais qu'une manipulation sous air est autorisée.

Le catalyseur C2 est préparé dans l'ordre inverse de C1, à savoir d'abord la passivation, suivie de sulfuration/activation. Une quantité de 130g (exprimé sur une base de catalyseur sec) du même catalyseur commercial d'hydrocraquage que celui utilisé à l'exemple 1 sont imprégnés avec 52ml d'une solution contenant de 4,3ml de MDEA (methyldiethanolamine) dans 47,7ml d'eau pour introduire 2% de N, puis séchés sous débit d'un mélange air/azote à 120°C. 120g sont ensuite chargés dans un réacteur en verre et sulfurés en présence de H2/H2S (25 litres d'H2S, 37 litres H2 par heure), avec une montée en température de 2°C/mn jusqu'à 350°C et un palier de 4h à 350°C, refroidissement par un flux de N2, puis mise à l'air ambiant. Il est obtenu le catalyseur C2 sulfuré, activé qui contient 6,9%pds de S, et 1,58%pds de N.
La TCAE du catalyseur C1 est de 45°C, ce qui signifie que le catalyseur est encore très sensible à l'auto-échauffement et que sa manipulation sous air à grosse échelle pourrait donner lieu à des phénomènes d'échauffement incontrôlé.

### Exemple 4: Evaluation catalytique

Les tests ci-après démontrent l'effet de l'introduction d'azote ex-situ sur le catalyseur qui est de neutraliser les fortes activités initiales sans affecter les activités en fonctionnement établi.

Le protocole de test utilise la conversion du n-heptane en produits craqués et isomérisés. On a reporté ci-après uniquement les valeurs de la conversion car elles sont significatives de la force de l'activité catalytique. La conversion est exprimée en poids de n-heptane converti divisé par le poids de n-heptane initial.

### Test 1 sur le catalyseur A (sulfuré, activé, sans N introduit):

10g de catalyseur A sont chargés dans le réacteur de l'unité de test. La charge est du n-heptane additivé de DMDS (dimethyldisulfure) à hauteur de 1 %pds de S, et de 0,1% pds (1000 ppm) de N par l'amine DEAPA (diethylaminopropylamine). Ces niveaux de soufre et d'azote sont représentatifs de ceux qui se trouvent dans un VGO (Vacuum Gas Oil) typique. La pression totale est établie à 30 bars, la température portée à 100°C, puis la charge est injectée à un débit correspondant à une vitesse volumique horaire (LHSV) de 1; la température est portée à 300°C avec une rampe de température de 2°C/minute, puis laissée en palier pendant 2h. La conversion du n-heptane mesurée à 300°C est de 26%.

La charge est alors maintenue pendant 36h pour que le catalyseur s'équilibre avec les 1000ppm d'azote apporté par la charge. La température est alors montée à raison de 2°C/min jusqu'à 400°C, puis gardée 24h en palier. La conversion du n-heptane est mesurée à 33%.

### Tests 2a et 2b sur le catalyseur B (sulfuré, non activé, N introduit):

Le protocole du test 2a tient compte du fait que le catalyseur B n'est pas activé, et qu'il requiert une phase d'activation in-situ avec palier à 360°C sous hydrogène

10g de catalyseur B sont chargés dans le réacteur de l'unité de test. La pression totale est établie à 30 bars, la température est portée à 350°C avec une rampe de température de 2°C/minute, puis laissée en palier pendant 2h. La température est ensuite baissée à 100°C, puis la charge est injectée à LHSV de 1; la température est portée à 300°C à 2°C/minute, puis laissée en palier pendant 2h

Aucune conversion du n-heptane n'est mesurée à 300°C (<1%), ce qui résulte de la passivation des sites acides. La température est élevée à 360°C à raison de 2°C/min puis après un palier de 2h on détermine la conversion. Elle est de 10%.
La charge est alors maintenue pendant 34h pour que le catalyseur s'équilibre avec les 1000ppm d'azote apporté par la charge. La température est alors élevée à 400°C à raison de 2°C/min puis après un palier de 24h on détermine la conversion. Le catalyseur est alors considéré comme en régime. La conversion du n heptane est de 28%.

Dans le test 2b, ce catalyseur B est aussi comparé aux autres en utilisant la procédure standard telle qu'utilisée pour le catalyseur A savoir : 10g de catalyseur B sont chargés, la pression totale ajustée à 30 bars, la température portée à 100°C, la charge injectée à LHSV de 1. La température est portée à 300°C avec une rampe de température de 2°C/minute. Après 2h à 300°C, il n'y a pas de conversion détectable (<1 %), ce qui résulte de la passivation des sites acides. La température est élevée à 360°C à raison de 2°C/min. Après 2h de palier, la conversion est de 6%.
La charge est alors maintenue pendant 34h, puis la température élevée à 400°C à raison de 2°C/min puis après un palier de 2h on détermine la conversion, qui est de 23%.

### Tests 3a et 3b sur les catalyseurs C1 et C2 (sulfuré, activé, avec N introduit):

10g de catalyseur C (sulfuré, activé et contenant 2% poids d'azote) sont testés avec le protocole du test 2b. Après 2h à 300°C, aucune conversion n'est détectée (<1 %), comme pour le catalyseur B, grâce à la passivation des sites acides. La température est élevée à 360°C à raison de 2°C/min puis après un palier de 2h, il n'y a pas de conversion détectable (<1 %).

La charge est alors maintenue pendant 34h, puis la température élevée à 400°C à raison de 2°C/min puis après un palier de 24h, on détermine la conversion, qui est de 34%.

Le tableau suivant résume les résultats catalytiques.

| Test | Protocole de test | | Activité à 300°C (%) | Activité à 360°C (%) | Activité à 400°C (%) | Durée du test (heures) |
|---|---|---|---|---|---|---|
| 1 | Protocole catalyseur activé | Catalyseur A sulfuré, activé, (sans N) | 26 | - | 33 | 65 |
| 2a | Activation in-situ | Catalyseur B sulfuré, non activé, (S, puis N) | < 1 | 10 | 28 | 72 |
| 2b | Protocole catalyseur activé | Catalyseur B sulfuré, non activé, (S, puis N) | < 1 | 6 | 23 | 65 |
| 3a | Protocole catalyseur activé | Catalyseur C1 sulfuré, activé, (S puis N) | < 1 | < 1 | 34 | 65 |
| 3b | Protocole catalyseur activé | Catalyseur C2 sulfuré, activé, (N puis S) | < 1 | 3 | 35 | 65 |

Les résultats montrent que le catalyseur A, qui n'a pas été passivé, est très actif dès le démarrage de la réaction. Pour cette raison, c'est un catalyseur qui serait dangereux à utiliser tel quel en conditions réelles d'exploitation, sans une procédure spéciale d'injection de composé azoté in-situ. Par la suite, le palier observé à 300°C avec la charge azotée a permis de le passiver et il a une activité de référence à 400°C.
Le catalyseur B est passivé, comme l'atteste l'absence d'activité à 300°C. A 360°C, de façon surprenante, il montre déjà une certaine activité. Pour expliquer cette activité craquante ce point, on peut invoquer la phase d'activation in-situ qui commence vers 130-150°C par la décomposition sous H2 du précurseur sulfuré en H2S, et continue par la sulfuration des oxydes par l'H2S et l'H2. Cette réaction est rapide et très exothermique, ce qui a deux conséquences. D'abord elle provoque la désorption d'une certaine quantité de composé azoté, et donc a pour effet de réduire l'efficacité de la passivation. C'est ce qui peut expliquer la conversion notable à 360°C dans le cas du test 2b. Dans le cas du test 2a, la procédure d'activation a été terminée par une étape à 350°C qui a provoqué une certaine désorption du composé azoté, accentuant encore cet effet de passivation moins efficace.

En second lieu, les phases sulfurées obtenues in-situ sont de moins bonne qualité, ce qui se traduit par une conversion réduite en fonctionnement établi.
Enfin, il est à noter que la procédure de test est rallongée par l'activation in-situ.
Les catalyseurs C1 et C2 représentent le meilleur compromis entre démarrage facile et bonne activité finale. Ils sont bien passivés (activité nulle à 300, faible à 360°C), et présentent une bonne activité de régime. D'autre part, la TCAE du produit C2 montre qu'il est manipulable sous air facilement, ce qui est un avantage supplémentaire.

## Revendications

1. Procédé de traitement ex-situ d'un catalyseur contenant au moins une phase hydrogénante, et au moins une silice alumine amorphe ou une zéolite contenant des sites acides, ledit procédé comportant
- une étape d'introduction d'azote par contact à une température inférieure à 100°C, avec au moins un composé azoté basique qui est l'ammoniac ou un composé décomposable en ammoniac, ledit composé étant introduit à raison de 0.5-10% poids exprimé en N et
- une étape de sulfuration/activation avec un gaz contenant de l'hydrogène et de l'hydrogène sulfuré à une température d'au moins 250°C, cette étape étant réalisée avant l'étape d'introduction dudit composé azoté,
- et le catalyseur obtenu est éventuellement séché.

2. Procédé selon la revendication 1 dans lequel la passivation est obtenue par traitement thermique sous hydrogène à au moins 250°C.

3. Procédé selon l'une des revendications précédentes dans lequel le catalyseur éventuellement séché est chargé dans le réacteur et la passivation est obtenue dans le réacteur.

4. Procédé selon l'une des revendications précédentes dans lequel le soufre et l'azote sont introduits de façon à ce que le catalyseur obtenu contienne de 5 à 25% poids de S et de 0,1 à 10% poids de N, de préférence de 8 à 15% S et de 1 à 5% N.

5. Procédé selon l'une des revendications précédentes dans lequel le catalyseur contient comme phase hydrogénante au moins un élément du groupe VIB et au moins un élément non noble du groupe VIII.

6. Procédé selon la revendication 1 dans lequel le catalyseur contient une zéolite.

7. Procédé selon l'une des revendications précédentes dans lequel le catalyseur est un catalyseur d'hydrocraquage.

8. Procédé selon l'une des revendications précédentes dans lequel la zéolite est une zéolite Y.

9. Procédé selon l'une des revendications précédentes dans lequel le composé azoté est choisi parmi le groupe des amines solubles dans l'eau.

10. Procédé selon l'une des revendications précédentes dans lequel le composé azoté est introduit par imprégnation à sec en présence d'un solvant, de préférence l'eau, puis le catalyseur est séché.

11. Procédé selon l'une des revendications précédentes dans lequel le catalyseur est un catalyseur neuf ou un catalyseur régénéré.

12. Procédé selon l'une des revendications précédentes dans lequel l'étape d'introduction d'azote est réalisée en l'absence d'hydrogène.

13. Procédé selon l'une des revendications précédentes dans lequel le catalyseur obtenu par le procédé de traitement est utilisé dans un procédé de transformation de charges hydrocarbonées.

14. Procédé selon la revendication 13 dans lequel le procédé de transformation de charges hydrocarbonées est un procédé d'hydrocraquage.

## Patentansprüche

1. Verfahren zur Behandlung ex-situ eines Katalysators, umfassend mindestens eine hydrierende Phase und mindestens ein Siliziumoxid/Aluminiumoxid oder ein Zeolith, umfassend saure Stellen, wobei das Verfahren umfasst:
- einen Schritt der Einleitung von Stickstoff durch Kontakt bei einer Temperatur unter 100 °C mit mindestens einer basischen Stickstoffverbindung, die Ammoniak oder eine in Ammoniak zersetzbare Verbindung ist, wobei die Verbindung im Verhältnis von 0,5-10 Gew.-%, ausgedrückt in N, eingeleitet wird, und
- einen Schritt der Schwefelung/Aktivierung mit einem Gas, umfassend Wasserstoff und Schwefelwasserstoff, bei einer Temperatur von mindestens 250 °C, wobei dieser Schritt vor dem Schritt der Einleitung der Stickstoffverbindung erfolgt,
- und wobei der erhaltene Katalysator eventuell getrocknet wird.

2. Verfahren nach Anspruch 1, bei dem die Passivierung durch thermische Behandlung unter Wasserstoff bei mindestens 250 °C erreicht wird.

3. Verfahren nach einem der vorhergehenden Ansprüche, bei dem der eventuell getrocknete Katalysator in den Reaktor geladen wird, und die Passivierung im Reaktor erreicht wird.

4. Verfahren nach einem der vorhergehenden Ansprüche, bei dem der Schwefel und der Stickstoff derart eingeleitet werden, dass der erhaltene Katalysator 5 bis 25 Gew.-% S und 0,1 bis 10 Gew.-% N, vorzugsweise 8 bis 15 Gew.-% S und 1 bis 5 Gew.-% N enthält.

5. Verfahren nach einem der vorhergehenden Ansprüche, bei dem der Katalysator als hydrierende Phase mindestens ein Element der Gruppe VIB und mindestens ein nicht edles Element der Gruppe VIII enthält.

6. Verfahren nach Anspruch 1, bei dem der Katalysator ein Zeolith enthält.

7. Verfahren nach einem der vorhergehenden Ansprüche, bei dem der Katalysator ein Hydrocracking-Katalysator ist.

8. Verfahren nach einem der vorhergehenden Ansprüche, bei dem das Zeolith ein Zeolith Y ist.

9. Verfahren nach einem der vorhergehenden Ansprüche, bei dem die Stickstoffverbindung in der Gruppe der wasserlöslichen Amine ausgewählt ist.

10. Verfahren nach einem der vorhergehenden Ansprüche, bei dem die Stickstoffverbindung durch Trockenimprägnieren im Beisein eines Lösungsmittels, vorzugsweise Wasser, eingeführt und dann der Katalysator getrocknet wird.

11. Verfahren nach einem der vorhergehenden Ansprüche, bei dem der Katalysator ein neuer Katalysator oder ein wiederverwerteter Katalysator ist.

12. Verfahren nach einem der vorhergehenden Ansprüche, bei dem der Schritt der Einleitung von Stickstoff ohne Wasserstoff erfolgt.

13. Verfahren nach einem der vorhergehenden Ansprüche, bei dem der Katalysator, der durch das Bearbeitungsverfahren erhalten wird, in einem Verfahren zur Umwandlung von kohlenwasserstoffhaltigen Chargen verwendet wird.

14. Verfahren nach Anspruch 13, bei dem das Verfahren zur Umwandlung von kohlenwasserstoffhaltigen Chargen ein Hydrocracking-Verfahren ist.

## Claims

1. Process for ex-situ treatment of a catalyst that contains at least one hydrogenating phase and at least one amorphous silica-alumina or a zeolite that contains acid sites, whereby said process comprises:
- A stage for introducing nitrogen by contact at a temperature that is less than 100°C, with at least one basic nitrogen-containing compound that is ammonia or a compound that can decompose into ammonia, with said compound being introduced at a rate of 0.5-10% by weight expressed in terms of N, and
- A sulfurization/activation stage with a gas that contains hydrogen and hydrogen sulfide at a temperature of at least 250°C, with this stage being carried out before the stage for introducing said nitrogen-containing compound,
- and the catalyst that is obtained is optionally dried.

2. Process according to claim 1, wherein the passivation is achieved by heat treatment under hydrogen at at least 250°C.

3. Process according to one of the preceding claims , wherein the optionally dried catalyst is charged into the reactor, and passivation is achieved in the reactor.

4. Process according to one of the preceding claims, in which the sulfur and the nitrogen are introduced in such a way that the catalyst that is obtained contains 5 to 25% by weight of S and 0.1 to 10% by weight of N, preferably 8 to 15% S, and 1 to 5% N.

5. Process according to one of the preceding claims, wherein as a hydrogenating phase, the catalyst contains at least one element of the group VIB and at least one non-noble element of the group VIII.

6. Process according to Claim 1, wherein the catalyst contains a zeolite.

7. Process according to one of the preceding claims, wherein the catalyst is a hydrocracking catalyst.

8. Process according to one of the preceding claims, wherein the zeolite is a Y zeolite.

9. Process according to one of the preceding claims, wherein the nitrogen-containing compound is selected from among the group of amines that are soluble in water.

10. Process according to one of the preceding claims, in which the nitrogen-containing compound is introduced by dry impregnation in the presence of a solvent, preferably water, and then the catalyst is dried.

11. Process according to one of the preceding claims, in which the catalyst is a new catalyst or a regenerated catalyst.

12. Process according to one of the preceding claims, in which the stage for introducing nitrogen is implemented in the absence of hydrogen.

13. Process according to one of the preceding claims, in which the catalyst that is obtained by the treatment process is used in a process for transformation of hydrocarbon feedstocks.

14. Process according to Claim 13 in which the process for transformation of hydrocarbon feedstocks is a hydrocracking process.
